# FASCICULE DE BREVET EUROPEEN

(11) **EP 3 072 176 B1**
(45) Date de publication et mention de la délivrance du brevet: **03.10.2018**
(21) Numéro de dépôt: 14812633.7
(22) Date de dépôt: 17.11.2014
(51) Int. Cl.: H01M 10/0565, H01M 10/42, H01M 10/0564, H01M 10/0525

(54) **ADDITIF D'ELECTROLYTE POUR BATTERIE LITHIUM-ION**
ELEKTROLYTADDITIV FÜR EINE LITHIUM-IONEN-BATTERIE
ELECTROLYTE ADDITIVE FOR LITHIUM-ION BATTERY

(30) Priorité: 20.11.2013 FR 1361387
(43) Date de publication de la demande: 28.09.2016
(73) Titulaire: Commissariat à l'Énergie Atomique et aux Énergies Alternatives, 75015 Paris (FR)
(72) Inventeur: PICARD, Lionel, F-38170 Seyssinet-Pariset (FR); MOREAU, Gilles, F-38000 Grenoble (FR)
(74) Mandataire: Nony
(86) Numéro de dépôt international: PCT/IB2014/066099
(87) Numéro de publication internationale: WO 2015/075619

(56) Documents cités:
- WO-A1-2013/077211
- WO-A1-2014/130676
- JP-A- 2005 310 445
- JP-A- 2010 244 943
- BYEONGMOON JEONG ET AL: "Thermosensitive sol-gel reversible hydrogels", ADVANCED DRUG DELIVERY REVIEWS, ELSEVIER, AMSTERDAM, NL, vol. 54, no. 1, 17 janvier 2002 (2002-01-17), pages 37-51, XP002529601, ISSN: 0169-409X, DOI: 10.1016/S0169-409X(01)00242-3
- HAI-HUI LIN ET AL: "In-Situ Thermoreversible Gelation of Block and Star Copolymers of Poly(ethylene glycol) and Poly( N -isopropylacrylamide) of Varying Architectures", MACROMOLECULES, vol. 34, no. 11, 1 mai 2001 (2001-05-01), pages 3710-3715, XP055170023, ISSN: 0024-9297, DOI: 10.1021/ma001852m
- YIYONG HE ET AL: "A thermoreversible ion gel by triblock copolymer self-assembly in an ionic liquid", CHEMICAL COMMUNICATIONS, no. 26, 1 juillet 2007 (2007-07-01), pages 2732-4, XP055169996, ISSN: 1359-7345, DOI: 10.1039/b704490a

## Description

### Domaine technique

La présente invention concerne le domaine des générateurs électrochimiques au lithium, qui fonctionnent selon le principe d'insertion ou de désinsertion, ou autrement dit intercalation-désintercalation, de lithium dans au moins une électrode.

Elle concerne plus particulièrement un accumulateur électrochimique au lithium.

Un des problèmes principaux des batteries Li-ion est qu'elles peuvent être sujettes à un emballement thermique ou surchauffe.

En conséquence, la plupart des batteries Li-ion utilisées comportent un moyen permettant la mise en sécurité en cas d'emballement thermique.

### Etat de la technique

Il a déjà été prévu d'utiliser les séparateurs pour assurer cette fonction. Une technologie vise à utiliser en tant que séparateur un polymère poreux dans les conditions normales d'utilisation de la batterie et qui devient non poreux, bloquant ainsi la conductivité ionique, en cas emballement thermique. En tant qu'exemples de cette technologie, on peut citer :
EP 1530809 qui concerne une batterie contenant un séparateur à base d'une couche inorganique poreuse, électriquement isolante recouverte d'un revêtement de particules de cires ou polymères fusibles à une température donnée correspondant à la surchauffe ;
EP 2485297 A2 qui concerne un séparateur pour batterie secondaire au lithium comprenant un film de base en polyéthylène ou polypropylène et une poudre à base de polyéthylène ou polypropylène
EP 2360014 A1 qui concerne un séparateur amélioré pour batterie secondaire au lithium comprenant un film à base de résine de polypropylène et une couche en résine de polyéthylène.

D'autres solutions ont été proposées pour protéger les batteries lithium.

Ainsi, US2003/0099886 divulgue l'utilisation d'un électrolyte non aqueux comprenant un composé organique de type oxyde de diphénylène qui, en cas de surcharge de la batterie, s'oxyde et polymérise pour former un revêtement sur la surface de la cathode. Le polymère formant le revêtement permet de créer un court-circuit entre la cathode et l'anode qui conduit à protéger la batterie.

US2011/0294003, US2011/0294017, US2011/0294018 décrivent l'utilisation de molécules navettes rédox. Ces molécules présentent l'avantage de pouvoir être oxydées/réduites de façon réversible à un potentiel défini, légèrement supérieur au potentiel de fin de charge de la cathode. Cette propriété permet de protéger la cellule, et par extension la batterie, en cas de surcharge en bloquant le potentiel de la cathode à une valeur correspondant au potentiel d'oxydation des molécules navette.

JP2010244943 décrit un électrolyte d'une batterie lithium-ion comprenant un polymère ou copolymère se gélifiant avec l'augmentation de la température.

Le document Macromolecules, vol. 34, 1 mai 2001, pages 3710-3715 décrit l'utilisation de copolymères thermoréversibles agissant comme additif modulateur de la viscosité dans un milieu fluide. Le principal inconvénient de ces technologies est que le blocage de la conductivité ionique est irréversible. La mise en sécurité de la batterie rechargeable permet certes d'éviter la détérioration de l'appareil contenant cette batterie, cependant la mise hors service de la batterie n'est pas réversible alors que celle-ci ne présente pas forcément un problème intrinsèque : la surchauffe de la batterie peut par exemple être due à une demande ponctuelle de surintensité.

Il demeure donc un besoin de disposer d'une batterie dans laquelle le flux ionique est diminué voire bloqué en cas d'emballement thermique mais qui puisse être restauré lorsque la batterie est revenue à une température normale de fonctionnement.

De manière surprenante et avantageuse, la présente invention vise à répondre à ce besoin.

### Exposé de l'invention

Selon un premier objet, la présente invention vise un électrolyte pour batterie lithium-ion selon la revendication 1, comprenant au moins un copolymère à blocs caractérisé en ce que ledit copolymère à blocs comprend au moins un segment polymérique A soluble dans ledit électrolyte et au moins un segment polymérique B doté d'une température de solubilisation « T » dans ledit électrolyte, les segments polymériques A et B étant présents en des quantités suffisantes pour permettre une augmentation de la viscosité de l'électrolyte, préférentiellement jusqu'à la gélification de l'électrolyte, à une température supérieure ou égale à la température « T », puis le retour de l'électrolyte à un état liquide lorsque la température de la batterie redescend en dessous de « T »..

Selon l'invention, ledit copolymère à blocs est thermosensible.

Certes, l'utilisation de copolymères à bloc dans les batteries lithium a déjà été décrite, mais, à la connaissance des inventeurs, essentiellement pour améliorer la conductivité ionique.

Ainsi, WO2010/101794 divulgue un copolymère conducteur ionique comprenant des groupes d'oxyde d'éthylène et son utilisation pour améliorer la conductivité ionique d'une batterie au lithium à température ambiante.

WO2009/131961 décrit l'utilisation d'un dispositif dans lequel l'anode en lithium est placée dans un électrolyte comprenant un copolymère à blocs nanostructuré, ce dispositif permettant de préserver l'intégrité de l'anode.

WO2007/142731 divulgue un polymère qui combine une conductivité ionique élevée et les propriétés structurelles requises pour préserver l'intégrité de l'anode métallique au lithium, ledit polymère étant utilisé en tant qu'électrolyte en phase solide.

Il ressort de ce qui précède que l'usage de même que la nature chimique des polymères considérés selon l'invention sont différents.

Ainsi le copolymère utilisé selon la présente invention présente la propriété de permettre l'augmentation de la viscosité voire la gélification de l'électrolyte pour batterie lithium-ion lorsque la batterie est portée à une température au moins égale à la température « T », puis le retour de l'électrolyte à un état liquide lorsque la température de la batterie redescend en dessous de « T ».

Ledit copolymère comporte au moins un segment polymérique (B) non soluble dans l'électrolyte à une température inférieure à « T » mais qui devient soluble à la température « T ». En général, le copolymère devient soluble en cas d'élévation soudaine de la température, c'est-à-dire en cas de surchauffe de la batterie.

Sans vouloir être lié par une quelconque théorie, il semble que la solubilisation de ce segment polymérique dans l'électrolyte conduit à un développement des chaînes constituant ce segment polymérique pour former un réseau tridimensionnel, par réticulation physique, en créant des liaisons fortes par exemple des liaisons hydrogène, alors qu'à une température inférieure à « T », les segments polymériques sont non solubles dans l'électrolyte, en conséquence à cette température les chaines sont repliées sur elles-mêmes, pelotonnées.

Selon un autre de ses objets, l'invention concerne une batterie lithium-ion comprenant l'électrolyte selon l'invention.

La présente invention vise encore utilisation d'au moins un copolymère à blocs à titre d'additif modulateur de la conductivité ionique de l'électrolyte d'une batterie selon la revendication 12, lithium-ion en fonction de la température dudit l'électrolyte caractérisé en ce que ledit copolymère bloc comprend au moins un segment polymérique A et au moins un segment polymérique B tels que ledit segment polymérique A est soluble dans l'électrolyte et ledit segment polymérique B est doté d'une température de solubilisation « T » dans ledit électrolyte, les segments polymériques A et B étant présents en des quantités suffisantes pour permettre l'augmentation de la viscosité, préférentiellement jusqu'à la gélification, de l'électrolyte à une température supérieure ou égale à la température « T » , puis le retour de l'électrolyte à un état liquide lorsque la température de la batterie redescend en dessous de « T »..

Avantageusement, à la température T, la conductivité de l'électrolyte transite d'une valeur C1 allant de 10⁻⁴S.cm⁻¹ à 0.1S.cm⁻¹ à une valeur C2 allant de 10⁻⁶ S.cm⁻¹ à 10⁻⁵ S.cm⁻¹.

En outre l'invention concerne utilisation d'au moins un copolymère bloc à titre d'additif modulateur de la viscosité de l'électrolyte d'une batterie lithium-ion en fonction de la température dudit électrolyte, ledit électrolyte comprenant au moins un sel de lithium, caractérisée en ce que ledit copolymère bloc comprend au moins un segment polymérique A et au moins un segment polymérique B tels que ledit segment polymérique A est soluble dans l'électrolyte et ledit segment polymérique B est doté d'une température de solubilisation « T » dans ledit électrolyte, les segments polymériques A et B étant présents en des quantités suffisantes pour permettre l'augmentation de la viscosité préférentiellement jusqu'à la gélification de l'électrolyte à une température supérieure ou égale à la température « T » , puis le retour de l'électrolyte à un état liquide lorsque la température de la batterie redescend en dessous de « T »..

D'autres avantages, propriétés, caractéristiques apparaitront à la lecture de la description et des figures qui suivent.

### Définitions

Par polymère « soluble » dans un solvant au sens de la présente invention, on entend un polymère qui, à la concentration de 0,1 % en poids de matière active dans ledit solvant à 25°C, conduit à une solution ou une suspension macroscopiquement homogène, transparente ou translucide, c'est-à-dire ayant une valeur de transmittance à une longueur d'onde de 500 nm à travers un échantillon de 1 cm d'épaisseur d'au moins 70 %, de préférence 80 %.

Par polymère « thermosensible » au sens de la présente invention, on entend un polymère dont les propriétés, en particulier vis-à-vis de la viscosité, vont être modifiées en fonction de la chaleur. Le caractère « thermosensible » des polymères utilisés selon l'invention est essentiellement dû à la présence du segment polymérique (B) qui possède une température de solubilisation « T ».

La température « T » définie dans le cadre de l'invention est la température de changement d'état de l'électrolyte : à partir de cette température, la gélification de l'électrolyte commence.

Le segment polymérique (B) est choisi de manière à ajuster la température « T », qui conditionne le changement de viscosité, à une valeur au-delà de laquelle peut être pressenti un risque de surtension, surchauffe ou d'emballement thermique.

Avantageusement la température « T » est inférieure ou égale à 80°C, de préférence «T » va de 60°C à 80°C, de manière encore préférée de 70°C à 80°C.

De préférence, la gélification de l'électrolyte correspond à une viscosité V au moins supérieure à 10 Pa.s à 25°C, et de préférence supérieure à 100 Pa.s à 25°C et encore de préférence divergente (gélification).

Comme déjà mentionné, l'électrolyte permet la conductivité ionique à une température inférieure à « T » alors qu'à une température supérieure à « T », lorsque l'électrolyte est sous forme gélifiée, la mobilité ionique est réduite, et de ce fait la conductivité ionique diminue voire est empêchée.

De préférence, l'électrolyte selon la présente invention présente une conductivité C1 allant de 10⁻⁴ S.cm⁻¹ à 0.1 S.cm⁻¹ à une température inférieure à « T ».

De préférence, l'électrolyte selon la présente invention présente une conductivité C2 inférieure à 10⁻⁵ S.cm⁻¹ à une température égale ou supérieure à « T ».

Comme mentionné précédemment, le copolymère à blocs utilisé dans la présente invention comprend au moins un segment polymérique A soluble dans ledit électrolyte et au moins un segment polymérique B doté d'une température de solubilisation « T » dans ledit électrolyte.

Le copolymère à blocs utilisé selon l'invention est avantageusement électro-inactif, il n'a sensiblement pas d'effets sur les performances de la batterie dans les conditions normales d'utilisation, et en particulier lorsque la température de la batterie est inférieure à « T ».

Le copolymère à blocs utilisé selon l'invention est choisi parmi les copolymères à blocs alternés, statistiques, peignes.

Comme déjà décrit, le copolymère à blocs utilisé comprend au moins deux segments polymériques (A) et (B) de nature différente. La nature et la longueur des segments polymériques est choisie en fonction des propriétés recherchées et notamment en fonction de l'électrolyte choisi, en particulier les segments polymériques peuvent être amphiphiles ou de nature très proche. En outre la nature et la longueur des segments polymériques (B) sont choisies en fonction de la température « T » souhaitée.

Ainsi, lorsque la température « T » est atteinte, les segments polymériques B deviennent solubles dans le milieu et les chaînes constituant ces segments polymériques (B) se déploient, les interactions physiques entre les chaines déployées des blocs assurent la gélification de l'électrolyte.

Les copolymères à blocs selon l'invention sont obtenus à partir de monomères de polymérisation en chaîne. Généralement ils sont obtenus par polymérisation contrôlée radicalaire, anionique ou cationique (ATRP (Atom-transfert radical polymerization), ITRP (iodine-transfert radical polymérisation), RAFT (réversible Addition fragmentation chain transfert)...). Ces types de polymérisation permettent en effet d'obtenir une géométrie spécifique du copolymère à bloc, en fonction des propriétés visées.

Plus particulièrement, outre la modification des propriétés du copolymère à « T », on peut également envisager de choisir les segments polymériques afin d'obtenir une modification des propriétés dudit copolymère à blocs suite à une modification de pKa ou pKb.

Les figures annexées présentent plusieurs variantes des copolymères à blocs utilisés selon l'invention.

### Description des figures

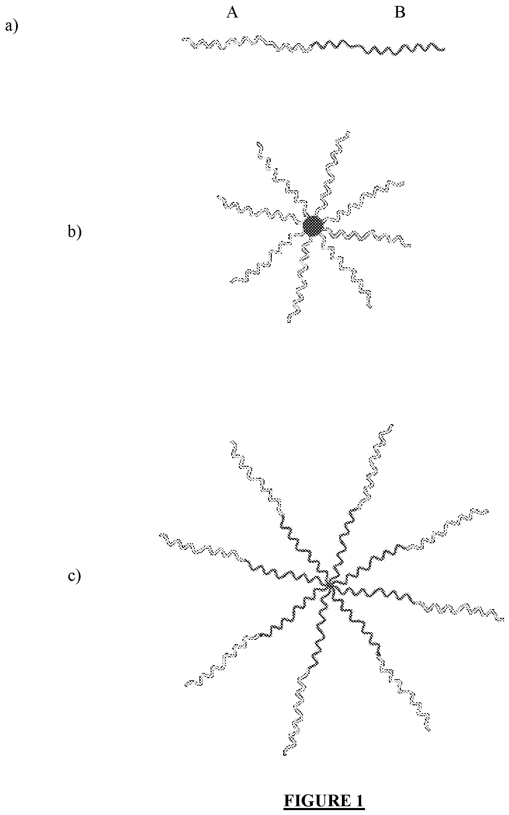

La figure 1 présente un copolymère dibloc,
   en a) est représenté le dibloc de base constitué du segment polymérique A (clair) et du segment polymérique B (foncé),
   en b) est représenté le dibloc à une température inférieure à « T » : le segment polymérique A (clair) est déployé et le segment polymérique B (foncé) sous forme repliée/pelotonnée,
   en c) est représenté le dibloc à une température supérieure à « T » : le segment polymérique A (clair) et le segment polymérique B (foncé) sont sous forme déployée.

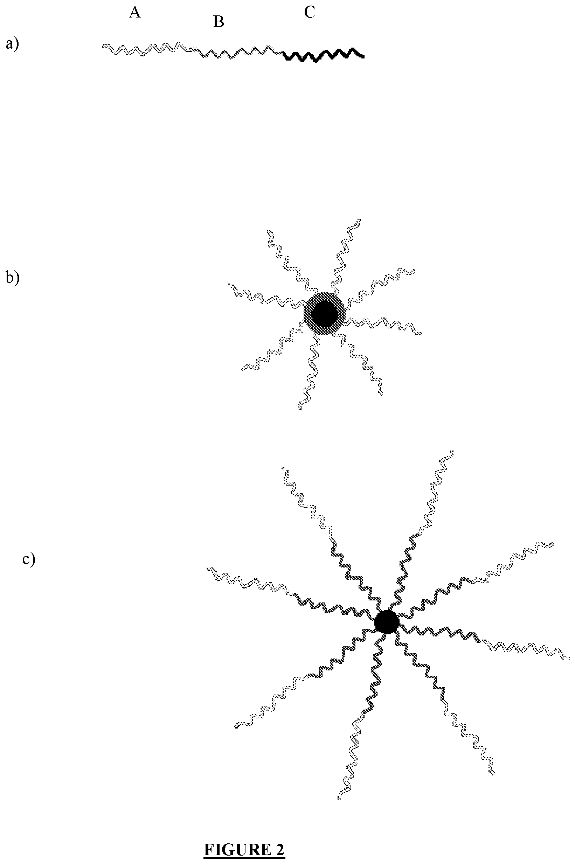

La figure 2 présente un copolymère tribloc,
   en a) est représenté le tribloc de base constitué du segment polymérique A (clair), du segment polymérique B (foncé) et du segment polymérique C (noir),
   en b) est représenté le tribloc à une température inférieure à « T » : le segment polymérique A est déployé, tandis que les segments polymériques B et C sont sous forme repliée/pelotonnée,
   en c) est représenté le tribloc à une température supérieure à « T » : les segments polymériques A et B sont sous forme déployée tandis que le segment polymérique C est sous forme repliée/pelotonnée.

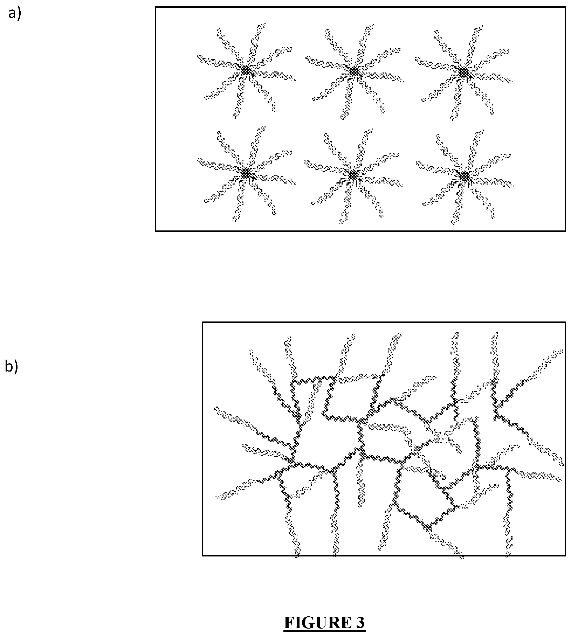

La figure 3 représente le comportement des copolymères diblocs en fonction de la température.
   Le schéma a) représente le comportement des copolymères diblocs à une température inférieure à T : les segments polymériques A (clair) sont déployés et les segments polymériques B (foncé) sont sous forme repliée/pelotonnées. Sous cette configuration, la viscosité de l'électrolyte n'est pas modifiée et la conductivité ionique dans l'électrolyte est normale.
   Le schéma b) représente le comportement des copolymères diblocs à une température supérieure à T : le segment polymérique A (clair) et le segment polymérique B (foncé) sont sous forme déployée. Sous cette configuration, l'électrolyte est sous forme gélifiée et la conductivité ionique dans l'électrolyte est diminuée voire bloquée.

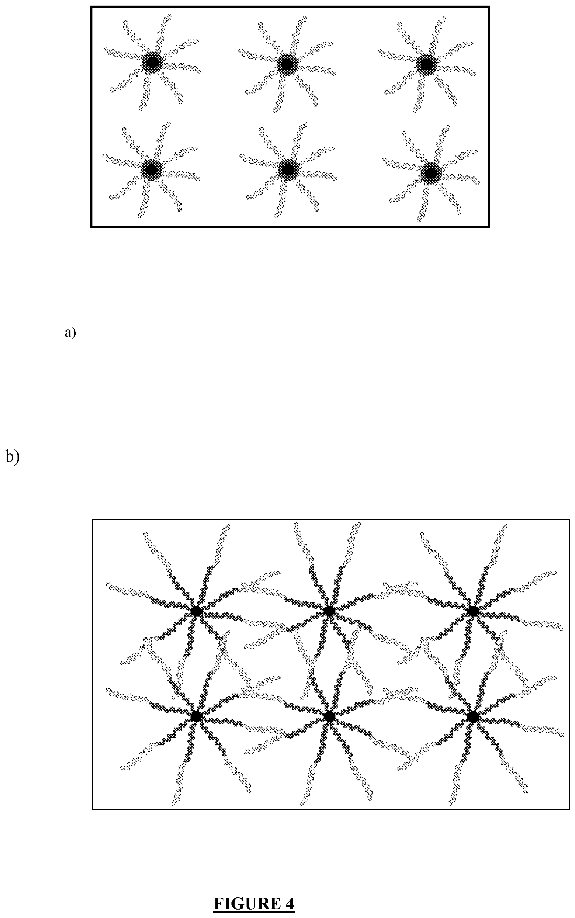

La figure 4 représente le comportement des copolymères triblocs en fonction de la température.
   Le schéma a) représente le comportement des copolymères triblocs à une température inférieure à T : les segments polymériques A sont déployés, tandis que les segments polymériques B et C sont sous forme repliée/pelotonnée. Sous cette configuration, la viscosité de l'électrolyte n'est pas modifiée et la conductivité ionique dans l'électrolyte est normale.
   Le schéma b) représente le comportement des copolymères triblocs à une température supérieure à T : les segments polymériques A et B sont sous forme déployée tandis que les segments polymériques C sont sous forme repliée/pelotonnée. Sous cette configuration, l'électrolyte est sous forme gélifiée et la conductivité ionique dans l'électrolyte est diminuée voire bloquée.

### Description détaillée

Comme précédemment mentionné, le segment polymérique A est soluble dans ledit électrolyte quelle que soit la température, en particulier il est soluble à une température inférieure à « T ».

Le segment polymérique A permet avantageusement la stabilisation stérique de l'électrolyte et permet ainsi d'éviter les risque de sédimentation.

De préférence, le segment polymérique A possède une masse molaire allant de 2 000 g.mol⁻¹ à 300 000 g.mol⁻¹ préférentiellement de 8 000 g.mol⁻¹ à 80 000 g.mol⁻¹.

De préférence, le segment polymérique A présente un degré de polymérisation DP_{A} supérieur à 10, de préférence supérieur à 20, plus particulièrement allant de 50 à 800.

Le segment polymérique A est choisi parmi les polymères suivants : polyacrylates, polyméthacrylates, polycarbonates, polyestercarbonates, polylactones, polylactames, polyesters, polyéthers, les homopolymères et copolymères statistiques solubles de polyéthers, en particulier de polyoxyéthylène, polyoxypropylène, polyoxybutylène, ainsi que les copolymères de ces polymères ou monomères correspondants.

Le segment polymérique A est notamment obtenu à partir d'au moins un monomère formant les polymères suivants : polyacrylates, polyméthacrylates, polycarbonates, polyestercarbonates, polylactones, polylactames, polyesters, polyéthers, les homopolymères et copolymères statistiques solubles de polyéthers, en particulier de polyoxyéthylène, polyoxypropylène, polyoxybutylène, ainsi que les copolymères de ces polymères ou monomères correspondants.

Le segment polymérique A peut donc être constitué de monomères de même nature ou de monomères de nature différente.

Selon un mode particulièrement préféré, le segment polymérique A est un polymère choisi parmi les polycarbonates, les polyéthers et leurs copolymères.

Le copolymère à blocs utilisé dans la présente invention comprend en outre au moins un segment polymérique B doté d'une température de solubilisation « T » dans ledit électrolyte.

Par « température de solubilisation » au sens de la présente demande, on entend une température au-dessus de laquelle ledit polymère est soluble dans le milieu utilisé en particulier dans l'électrolyte mis en oeuvre.

De préférence, le segment polymérique B possède une masse molaire allant de 2 000 g.mol⁻¹ à 300 000 g.mol⁻¹ préférentiellement de 8 000 g.mol⁻¹ à 80 000 g.mol⁻¹.

De préférence, le segment polymérique B présente un degré de polymérisation DP_{B} supérieur à 10, de préférence supérieur à 20, plus particulièrement allant de 50 à 800.

Le segment polymérique B est un polymère obtenu à partir d'au moins un monomère choisi parmi les monomères suivants : les acides acryliques et méthacryliques, les N-alkyl-acrylamides ou N-alkyl-méthacrylamides, en particulier le N-isopropylacrylamide, le N-isopropylmethacrylamide, le N,N'diéthylacrylamide, les saccharides, le fluorure de vinylidène, l'Hexafluoropropylène.

Selon un mode particulièrement préféré, le segment polymérique B est un polymère choisi parmi les poly (N-alkyl-acrylamides), poly(N-alkyl-méthacrylamides), les polysaccharides, le polyfluorure de vinylidène (PVdF) et les copolymères polyfluorures de vinylidène-hexafluoropropylène (PVdF-HFP).

Le ratio molaire segments polymériques B/ segments polymériques A est supérieur à 0.5, et de préférence va de 1 à 10 et plus préférentiellement de 2 à 5.

Avantageusement, le copolymère à blocs comprend au moins un segment polymérique C insoluble dans l'électrolyte. Plus précisément, le segment polymérique C est insoluble dans l'électrolyte quelle que soit la température, en particulier il est insoluble à une température supérieure à « T ».

Sans vouloir être lié à une quelconque théorie, le segment polymérique C contribue à la création de noeuds de réticulation qui vont stabiliser le réseau formé par les copolymères à blocs et ainsi améliorer la structure du gel. Le segment polymérique C permet d'augmenter le module élastique du gel.

En outre la présence de segments polymériques C dans le copolymère à blocs permet d'utiliser ledit copolymère à blocs dans l'électrolyte en quantité moindre sans que la stabilité de l'électrolyte sous forme gélifiée soit altérée.

De préférence, le segment polymérique C est choisi parmi les polyoléfines saturées ou insaturées, branchées ou non branchées, en particulier en C₂-C₁₂, le polystyrène et leurs mélanges et leur copolymères.

Avantageusement, le ratio molaire segments polymériques A/ segments polymériques C va de 0.5 à 10 préférentiellement de 1 à 5.

Avantageusement, le ratio molaire segments polymériques B/ segments polymériques C va de 1 à 10, préférentiellement de 1 à 3.

Selon un mode préféré, le(s) copolymère(s) à blocs est/sont présents en une quantité allant de 1 à 15% en poids par rapport au poids total de l'électrolyte.

L'électrolyte utilisé selon l'invention comprend au moins un sel de lithium. Les sels de lithium peuvent être choisis parmi tous les composés du lithium susceptibles d'être dissociés en un solvant organique pour produire des ions lithium. A titre d'exemples de ces composés du lithium, on peut citer LiClO₄, LiBF₄, LiPF₆, LiCF₃SO₃, LiN(CF₃SO₂)₂.

L'électrolyte utilisé selon l'invention peut comprendre tout solvant organique généralement utilisé pour la fabrication d'accumulateur électrochimique au lithium, en particulier le solvant est choisi parmi le carbonate d'éthylène, le carbonate de propylène, le carbonate de diméthyle, le carbonate d'éthylméthyle, le carbonate de diéthyle, le tétrahydrofurane, le tétraéthylene glycol dimethyl éther, le diméthyléther, le dioxolane, le dioxane, le polyéthylène glycol diméthyléther et ou les nitriles ou leur(s) mélange(s)

Ainsi, la conduction ionique est assurée par l'électrolyte contenant un solvant, ou un mélange de solvants, et comprenant le copolymère et des sels de lithium

L'exemple qui suit illustre l'invention sans en limiter la portée.

### Exemple

Un électrolyte pour batterie lithium-ion a été préparé en ajoutant à un mélange EC/PC/DMC (1/1/3)ₘₒₗ + 1M LiTFSI (LiN(CF3SO2)2), un copolymère comprenant les segments polymériques A, B et C suivants :
Segment A : polyacrylate (10 000 g.mol-1)
Segment B : poly(nbutyl methacrylamide (50 000 g.mol-1)
Segment C : Polyethylene (15000g.mol-1).

La température de solubilisation du segment polymérique B correspondant également à la gélification de 80°C.

## Revendications

1. Electrolyte pour batterie lithium-ion comprenant au moins un sel de lithium et au moins un copolymère à blocs **caractérisé en ce que** ledit copolymère à blocs comprend au moins un segment polymérique A soluble dans ledit électrolyte et au moins un segment polymérique B doté d'une température de solubilisation « T » dans ledit électrolyte, les segments polymériques A et B étant présents en des quantités suffisantes pour permettre une augmentation de la viscosité de l'électrolyte préférentiellement jusqu'à la gélification de l'électrolyte à une température supérieure ou égale à la température « T » , puis le retour de l'électrolyte à un état liquide lorsque la température de la batterie redescend en dessous de « T », ladite température T étant de préférence inférieure ou égale à 80°C,
ledit copolymère à blocs comprenant au moins un segment polymérique A choisi parmi les polymères suivants : polyacrylates, polyméthacrylates, polycarbonates, polyestercarbonates, polylactones, polylactames, polyesters, polyéthers, les homopolymères et copolymères statistiques solubles de polyéthers, en particulier de polyoxyéthylène, polyoxypropylène, polyoxybutylène, ainsi que les copolymères de ces polymères ou monomères correspondants,
ledit copolymère à blocs comprenant au moins un segment polymérique B obtenu à partir d'au moins un monomère choisi parmi les monomères suivants : les acides acryliques et méthacryliques, les N-alkyl-acrylamides ou N-alkyl-méthacrylamides, en particulier le N-isopropylacrylamide, le N-isopropylmethacrylamide, le N,N'diéthylacrylamide, les saccharides, le fluorure de vinylidène, l'Hexafluoropropylène,
le ratio molaire segments polymériques B/ segments polymériques A étant supérieur à 0.5.

2. Electrolyte selon la revendication précédente dans lequel la gélification de l'électrolyte correspond à une viscosité V au moins supérieure à 10 Pa.s à 25°C, et de préférence supérieure à 100 Pa.s à 25°C.

3. Electrolyte selon l'une des revendications précédentes présentant une conductivité C1 allant de 10⁻⁴ S.cm⁻¹ à 0.1 S.cm⁻¹ à une température inférieure à T.

4. Electrolyte selon l'une des revendications précédentes présentant une conductivité C2 inférieure à 10⁻⁵ S.cm⁻¹ à une température égale ou supérieure à T.

5. Electrolyte selon l'une des revendications précédentes dans lequel le copolymère à blocs comprend au moins un segment polymérique B choisi parmi les poly (N-alkyl-acrylamides), poly(N-alkyl-méthacrylamides), les polysaccharides, le polyfluorure de vinylidène et les copolymères polyfluorures de vinylidène-hexafluoropropylène.

6. Electrolyte selon l'une des revendications précédentes dans lequel le copolymère à blocs comprend au moins un segment polymérique A et au moins un segment polymérique B, le ratio molaire segments polymériques B/ segments polymériques A allant de 1 à 10 et plus préférentiellement de 2 à 5.

7. Electrolyte selon l'une des revendications précédentes dans lequel le copolymère à blocs comprend au moins un segment polymérique C insoluble dans l'électrolyte, ledit au moins un segment polymérique C étant choisi parmi les polyoléfines saturées ou insaturées, branchées ou non branchées, en particulier en C2-C12, le polystyrène et leurs mélanges et leurs copolymères.

8. Electrolyte selon la revendication 7 comprenant un copolymère à blocs dans lequel le ratio molaire segments polymériques A/ segments polymériques C va de 0.5 à 10 préférentiellement de 1 à 5.

9. Electrolyte selon l'une des revendications 7 ou 8 comprenant un copolymère à blocs dans lequel le ratio molaire segments polymériques B/ segments polymériques C va de 1 à 10, préférentiellement de 1 à 3.

10. Electrolyte selon l'une des revendications précédentes dans lequel le(s) copolymère(s) à blocs est/sont présents en une quantité allant de 1 à 15% en poids par rapport au poids total de l'électrolyte.

11. Batterie lithium-ion comprenant l'électrolyte selon l'une quelconque des revendications précédentes.

12. Utilisation d'au moins un copolymère à blocs à titre d'additif modulateur de la conductivité ionique de l'électrolyte d'une batterie lithium-ion en fonction de la température dudit l'électrolyte, ledit électrolyte comprenant au moins un sel de lithium, **caractérisé en ce que** ledit copolymère bloc comprend au moins un segment polymérique A et au moins un segment polymérique B tels que ledit segment polymérique A est soluble dans l'électrolyte et ledit segment polymérique B est doté d'une température de solubilisation « T » dans ledit électrolyte, les segments polymériques A et B étant présents en des quantités suffisantes pour permettre l'augmentation de la viscosité préférentiellement jusqu'à la gélification de l'électrolyte à une température supérieure ou égale à la température « T » puis le retour de l'électrolyte à un état liquide lorsque la température de la batterie redescend en dessous de « T »,
ledit copolymère à blocs comprenant au moins un segment polymérique A choisi parmi les polymères suivants : polyacrylates, polyméthacrylates, polycarbonates, polyestercarbonates, polylactones, polylactames, polyesters, polyéthers, les homopolymères et copolymères statistiques solubles de polyéthers, en particulier de polyoxyéthylène, polyoxypropylène, polyoxybutylène, ainsi que les copolymères de ces polymères ou monomères correspondants,
ledit copolymère à blocs comprenant au moins un segment polymérique B obtenu à partir d'au moins un monomère choisi parmi les monomères suivants : les acides acryliques et méthacryliques, les N-alkyl-acrylamides ou N-alkyl-méthacrylamides, en particulier le N-isopropylacrylamide, le N-isopropylmethacrylamide, le N,N'diéthylacrylamide, les saccharides, le fluorure de vinylidène, l'Hexafluoropropylène,
le ratio molaire segments polymériques B/ segments polymériques A étant supérieur à 0.5.

13. Utilisation d'au moins un copolymère bloc selon la revendication 12 dans laquelle à la température T, la conductivité de l'électrolyte transite d'une valeur Cl allant de 10⁻⁴S.cm⁻¹ à 0.1S.cm⁻¹ à une valeur C2 allant de 10⁻⁶ S.cm⁻¹ à 10⁻⁵ S.cm⁻¹.

14. Utilisation d'au moins un copolymère bloc à titre d'additif modulateur de la viscosité de l'électrolyte d'une batterie lithium-ion en fonction de la température dudit électrolyte, ledit électrolyte comprenant au moins un sel de lithium, **caractérisée en ce que** ledit copolymère bloc comprend au moins un segment polymérique A et au moins un segment polymérique B tels que ledit segment polymérique A est soluble dans l'électrolyte et ledit segment polymérique B est doté d'une température de solubilisation « T » dans ledit électrolyte, les segments polymériques A et B étant présents en des quantités suffisantes pour permettre l'augmentation de la viscosité préférentiellement jusqu'à la gélification de l'électrolyte à une température supérieure ou égale à la température « T » puis le retour de l'électrolyte à un état liquide lorsque la température dudit électrolyte redescend en dessous de « T »,
ledit copolymère à blocs comprenant au moins un segment polymérique A choisi parmi les polymères suivants : polyacrylates, polyméthacrylates, polycarbonates, polyestercarbonates, polylactones, polylactames, polyesters, polyéthers, les homopolymères et copolymères statistiques solubles de polyéthers, en particulier de polyoxyéthylène, polyoxypropylène, polyoxybutylène, ainsi que les copolymères de ces polymères ou monomères correspondants,
ledit copolymère à blocs comprenant au moins un segment polymérique B obtenu à partir d'au moins un monomère choisi parmi les monomères suivants : les acides acryliques et méthacryliques, les N-alkyl-acrylamides ou N-alkyl-méthacrylamides, en particulier le N-isopropylacrylamide, le N-isopropylmethacrylamide, le N,N'diéthylacrylamide, les saccharides, le fluorure de vinylidène, l'Hexafluoropropylène,
le ratio molaire segments polymériques B/ segments polymériques A étant supérieur à 0.5.

## Patentansprüche

1. Elektrolyt für eine Lithium-Ionen-Batterie, umfassend mindestens ein Lithiumsalz und mindestens ein Blockcopolymer,
**dadurch gekennzeichnet, dass** das Blockcopolymer mindestens ein Polymersegment A, das in dem Elektrolyten löslich ist, und mindestens ein Polymersegment B, das eine Löslichkeitstemperatur "T" in dem Elektrolyten aufweist, umfasst, wobei die Polymersegmente A und B in ausreichenden Mengen vorhanden sind, um eine Erhöhung der Viskosität des Elektrolyten vorzugsweise bis zur Gelierung des Elektrolyten bei einer Temperatur größer oder gleich der Löslichkeitstemperatur "T", dann die Rückkehr des Elektrolyten in einen flüssigen Zustand, wenn die Temperatur der Batterie wieder unter "T" fällt, zu gestatten, wobei die Temperatur T vorzugsweise kleiner oder gleich 80°C ist,
wobei das Blockcopolymer mindestens ein Polymersegment A umfasst, das aus den folgende Polymeren ausgewählt ist: Polyacrylaten, Polymethacrylaten, Polycarbonaten, Polyestercarbonaten, Polylactonen, Polylactamen, Polyestern, Polyethern, Homopolymeren und löslichen statistischen Copolymeren von Polyethern, insbesondere Polyoxyethylen, Polyoxypropylen, Polyoxybutylen, sowie Copolymeren dieser Polymere oder entsprechenden Monomere,
wobei die Blockcopolymere mindestens ein Polymersegment B umfassen, welches aus mindestens einem Monomer erhalten wird, das aus den folgenden Monomeren ausgewählt ist: Acryl- und Methacrylsäuren, N-Alkylacrylamiden oder N-Alkylmethacrylamiden, insbesondere N-Isopropylacrylamid, N-Isopropylmethacrylamid, N,N'-Diethylacrylamid, Sacchariden, Vinylidenfluorid, Hexafluorpropylen,
wobei das Molverhältnis der Polymersegmente B/Polymersegmente A größer als 0,5 ist.

2. Elektrolyt nach dem vorhergehenden Anspruch,
wobei die Gelierung des Elektrolyten einer Viskosität V mindestens größer 10 Pa.s bei 25°C und vorzugsweise größer 100 Pa.s bei 25°C entspricht.

3. Elektrolyt nach einem der vorhergehenden Ansprüche, welcher eine Leitfähigkeit C1 von 10⁻⁴ S.cm⁻¹ bis 0,1 S.cm⁻¹ bei einer Temperatur kleiner T aufweist.

4. Elektrolyt nach einem der vorhergehenden Ansprüche, welcher eine Leitfähigkeit C2 kleiner 10⁻⁵ S.cm⁻¹ bei einer Temperatur größer oder gleich T aufweist.

5. Elektrolyt nach einem der vorhergehenden Ansprüche, wobei das Blockcopolymer mindestens ein Polymersegment B umfasst, das ausgewählt ist aus Poly(N-alkylacrylamiden), Poly(N-alkylmethacrylamiden), Polysacchariden, Vinylidenpolyfluorid und perfluorierten Copolymeren von Vinylidenhexafluorpropylen.

6. Elektrolyt nach einem der vorhergehenden Ansprüche, wobei das Blockcopolymer mindestens ein Polymersegment A und mindestens ein Polymersegment B umfasst, wobei das Molverhältnis der Polymersegmente B/Polymersegmente A von 1 bis 10 und bevorzugter von 2 bis 5 beträgt.

7. Elektrolyt nach einem der vorhergehenden Ansprüche, wobei das Blockcopolymer mindestens ein Polymersegment C umfasst, das in dem Elektrolyten unlöslich ist, wobei das mindestens eine Polymersegment C ausgewählt ist aus gesättigten oder ungesättigten, verzweigten oder unverzweigten, insbesondere C2-C12-, Polyolefinen, Polystyrol und ihren Mischungen und ihren Copolymeren.

8. Elektrolyt nach Anspruch 7,
umfassend ein Blockcopolymer, wobei das Molverhältnis der Polymersegmente A/Polymersegmente C von 0,5 bis 10, vorzugsweise von 1 bis 5 beträgt.

9. Elektrolyt nach einem der Ansprüche 7 oder 8, umfassend ein Blockcopolymer, wobei das Molverhältnis der Polymersegmente B/Polymersegmente C von 1 bis 10, vorzugsweise von 1 bis 3 beträgt.

10. Elektrolyt nach einem der vorhergehenden Ansprüche, wobei das (die) Blockcopolymer(e) in einer Menge von 1 bis 15 Gew.-% in Bezug auf das Gesamtgewicht des Elektrolyten vorhanden ist (sind).

11. Lithium-Ionen-Batterie, umfassend den Elektrolyten nach einem der vorhergehenden Ansprüche.

12. Verwendung mindestens eines Blockcopolymers als Modulatoradditiv der ionischen Leitfähigkeit des Elektrolyten einer Lithium-Ionen-Batterie als Funktion der Temperatur des Elektrolyten, wobei der Elektrolyt mindestens ein Lithiumsalz umfasst, **dadurch gekennzeichnet, dass** das Blockcopolymer mindestens ein Polymersegment A und mindestens ein Polymersegment B derart umfasst, dass das Polymersegment A in dem Elektrolyten löslich ist, und das Polymersegment B eine Löslichkeitstemperatur "T" in dem Elektrolyten aufweist, wobei die Polymersegmente A und B in ausreichenden Mengen vorhanden sind, um eine Erhöhung der Viskosität vorzugsweise bis zur Gelierung des Elektrolyten bei einer Temperatur größer oder gleich der Löslichkeitstemperatur "T", dann die Rückkehr des Elektrolyten in einen flüssigen Zustand, wenn die Temperatur der Batterie wieder unter "T" fällt, zu gestatten,
wobei das Blockcopolymer mindestens ein Polymersegment A umfasst, das aus den folgende Polymeren ausgewählt ist: Polyacrylaten, Polymethacrylaten, Polycarbonaten, Polyestercarbonaten, Polylactonen, Polylactamen, Polyestern, Polyethern, Homopolymeren und löslichen statistischen Copolymeren von Polyethern, insbesondere Polyoxyethylen, Polyoxypropylen, Polyoxybutylen, sowie Copolymeren dieser Polymere oder entsprechenden Monomere,
wobei die Blockcopolymere mindestens ein Polymersegment B umfassen, welches aus mindestens einem Monomer erhalten wird, das aus den folgenden Monomeren ausgewählt ist: Acryl- und Methacrylsäuren, N-Alkylacrylamiden oder N-Alkylmethacrylamiden, insbesondere N-Isopropylacrylamid, N-Isopropylmethacrylamid, N,N'-Diethylacrylamid, Sacchariden, Vinylidenfluorid, Hexafluorpropylen,
wobei das Molverhältnis der Polymersegmente B/Polymersegmente A größer als 0,5 ist.

13. Verwendung mindestens eines Blockcopolymers nach Anspruch 12,
wobei bei der Temperatur T die Leitfähigkeit des Elektrolyten von einem Wert C1 von 10⁻⁴ S.cm⁻¹ bis 0,1 S.cm⁻¹ auf einen Wert C2 von 10⁻⁶ S.cm⁻¹ bis 10⁻⁵ S.cm⁻¹ übergeht.

14. Verwendung mindestens eines Blockcopolymers als Modulatoradditiv der Viskosität des Elektrolyten einer Lithium-Ionen-Batterie als Funktion der Temperatur des Elektrolyten, wobei der Elektrolyt mindestens ein Lithiumsalz umfasst,
**dadurch gekennzeichnet, dass** das Blockcopolymer mindestens ein Polymersegment A und mindestens ein Polymersegment B derart umfasst, dass das Polymersegment A in dem Elektrolyten löslich ist, und das Polymersegment B eine Löslichkeitstemperatur "T" in dem Elektrolyten aufweist, wobei die Polymersegmente A und B in ausreichenden Mengen vorhanden sind, um eine Erhöhung der Viskosität vorzugsweise bis zur Gelierung des Elektrolyten bei einer Temperatur größer oder gleich der Löslichkeitstemperatur "T", dann die Rückkehr des Elektrolyten in einen flüssigen Zustand, wenn die Temperatur der Batterie wieder unter "T" fällt, zu gestatten,
wobei das Blockcopolymer mindestens ein Polymersegment A umfasst, das aus den folgende Polymeren ausgewählt ist: Polyacrylaten, Polymethacrylaten, Polycarbonaten, Polyestercarbonaten, Polylactonen, Polylactamen, Polyestern, Polyethern, Homopolymeren und löslichen statistischen Copolymeren von Polyethern, insbesondere Polyoxyethylen, Polyoxypropylen, Polyoxybutylen, sowie Copolymeren dieser Polymere oder entsprechenden Monomere,
wobei die Blockcopolymere mindestens ein Polymersegment B umfassen, welches aus mindestens einem Monomer erhalten wird, das aus den folgenden Monomeren ausgewählt ist: Acryl- und Methacrylsäuren, N-Alkylacrylamiden oder N-Alkylmethacrylamiden, insbesondere N-Isopropylacrylamid, N-Isopropylmethacrylamid, N,N'-Diethylacrylamid, Sacchariden, Vinylidenfluorid, Hexafluorpropylen,
wobei das Molverhältnis der Polymersegmente B/Polymersegmente A größer als 0,5 ist.

## Claims

1. An electrolyte for a lithium-ion battery comprising at least a lithium salt and at least one block copolymer, **characterized in that** said block copolymer comprises at least one polymeric segment A which is soluble in said electrolyte and at least one polymeric segment B having a temperature for dissolution "T" in said electrolyte, the polymeric segments A and B being present in amounts sufficient to make possible an increase in the viscosity of the electrolyte, preferably up to gelling of the electrolyte, at a temperature greater than or equal to the temperature "T", and then the return of the electrolyte to a liquid state when the temperature of the battery falls back below "T", said temperature T being preferably less than or equal to 80°C,
said block copolymer comprising at least one polymeric segment A chosen from the following polymers: polyacrylates, polymethacrylates, polycarbonates, polyester carbonates, polylactones, polylactams, polyesters, polyethers, soluble homopolymers and random copolymers of polyethers, in particular of polyoxyethylene, polyoxypropylene or polyoxybutylene, and also the copolymers of these polymers or corresponding monomers,
said block copolymer comprising at least one polymeric segment B obtained from at least one monomer chosen from the following monomers: acrylic and methacrylic acids, N-alkylacrylamides or N-alkylmethacrylamides, in particular N-isopropylacrylamide, N-isopropylmethacrylamide or N,N'-diethylacrylamide, saccharides, vinylidene fluoride or hexafluoropropylene,
the polymeric segments B/ polymeric segments A molar ratio being greater than 0.5.

2. The electrolyte as claimed in the preceding claim, in which the gelling of the electrolyte corresponds to a viscosity V at least greater than 10 Pa.s at 25°C and preferably greater than 100 Pa.s at 25°C.

3. The electrolyte as claimed in one of the preceding claims, exhibiting a conductivity C1 ranging from 10⁻⁴ S.cm⁻¹ to 0.1 S.cm⁻¹ at a temperature of less than T.

4. The electrolyte as claimed in one of the preceding claims, exhibiting a conductivity C2 of less than 10⁻⁵ S.cm⁻¹ at a temperature equal to or greater than T.

5. The electrolyte as claimed in any of the preceding claims, in which the block copolymer comprises at least one polymeric segment B chosen from poly(N-alkylacrylamides), poly(N-alkylmethacrylamides), polysaccharides, polyvinylidene fluoride and poly(vinylidene fluoride-hexafluoropropylene) copolymers.

6. The electrolyte as claimed in one of the preceding claims, in which the block copolymer comprises at least one polymeric segment A and at least one polymeric segment B, the polymeric segments B/ polymeric segments A molar ratio ranging from 1 to 10 and more preferably from 2 to 5.

7. The electrolyte as claimed in one of the preceding claims, in which the block copolymer comprises at least one polymeric segment C which is insoluble in the electrolyte, said at least one polymeric segment C being chosen from saturated or unsaturated and branched or unbranched polyolefins, in particular poly(C₂-C₁₂ olefins), polystyrene and their mixtures and their copolymers.

8. The electrolyte as claimed in claim 7, comprising a block copolymer in which the polymeric segments A/ polymeric segments C molar ratio ranges from 0.5 to 10 and preferably from 1 to 5.

9. The electrolyte as claimed in one of claims 7 to 8, comprising a block copolymer in which the polymeric segments B/ polymeric segments C molar ratio ranges from 1 to 10 and preferably from 1 to 3.

10. The electrolyte as claimed in one of the preceding claims, in which the block copolymer(s) is/are present in an amount ranging from 1 to 15% by weight, with respect to the total weight of the electrolyte.

11. A lithium-ion battery comprising the electrolyte as claimed in any one of the preceding claims.

12. The use of at least one block copolymer as additive which modulates the ionic conductivity of the electrolyte of a lithium-ion battery as a function of the temperature of said electrolyte, **characterized in that** said block copolymer comprises at least one polymeric segment A and at least one polymeric segment B such that said polymeric segment A is soluble in the electrolyte and said polymeric segment B has a temperature for dissolution "T" in said electrolyte, the polymeric segments A and B being present in amounts sufficient to make possible an increase in the viscosity, preferably up to gelling, of the electrolyte at a temperature greater than or equal to the temperature "T" and then the return of the electrolyte to a liquid state when the temperature of the battery falls back below "T",
said block copolymer comprising at least one polymeric segment A chosen from the following polymers: polyacrylates, polymethacrylates, polycarbonates, polyester carbonates, polylactones, polylactams, polyesters, polyethers, soluble homopolymers and random copolymers of polyethers, in particular of polyoxyethylene, polyoxypropylene or polyoxybutylene, and also the copolymers of these polymers or corresponding monomers,
said block copolymer comprising at least one polymeric segment B obtained from at least one monomer chosen from the following monomers: acrylic and methacrylic acids, N-alkylacrylamides or N-alkylmethacrylamides, in particular N-isopropylacrylamide, N-isopropylmethacrylamide or N,N'-diethylacrylamide, saccharides, vinylidene fluoride or hexafluoropropylene,
the polymeric segments B/ polymeric segments A molar ratio being greater than 0.5.

13. The use of at least one block copolymer as claimed in claim 12, in which, at the temperature T, the conductivity of the electrolyte passes from a value C1 ranging from 10⁻⁴ S.cm⁻¹ to 0.1 S.cm⁻¹ to a value C2 ranging from 10⁻⁶ S.cm⁻¹ to 10⁻⁵ S.cm⁻¹.

14. The use of at least one block copolymer as additive which modulates the viscosity of the electrolyte of a lithium-ion battery as a function of the temperature of said electrolyte, **characterized in that** said block copolymer comprises at least one polymeric segment A and at least one polymeric segment B such that said polymeric segment A is soluble in the electrolyte and said polymeric segment B has a temperature for dissolution "T" in said electrolyte, the polymeric segments A and B being present in amounts sufficient to make possible an increase in the viscosity, preferably up to gelling, of the electrolyte at a temperature greater than or equal to the temperature "T" and then the return of the electrolyte to a liquid state when the temperature of the electrolyte falls back below "T",
said block copolymer comprising at least one polymeric segment A chosen from the following polymers: polyacrylates, polymethacrylates, polycarbonates, polyester carbonates, polylactones, polylactams, polyesters, polyethers, soluble homopolymers and random copolymers of polyethers, in particular of polyoxyethylene, polyoxypropylene or polyoxybutylene, and also the copolymers of these polymers or corresponding monomers,
said block copolymer comprising at least one polymeric segment B obtained from at least one monomer chosen from the following monomers: acrylic and methacrylic acids, N-alkylacrylamides or N-alkylmethacrylamides, in particular N-isopropylacrylamide, N-isopropylmethacrylamide or N,N'-diethylacrylamide, saccharides, vinylidene fluoride or hexafluoropropylene,
the polymeric segments B/ polymeric segments A molar ratio being greater than 0.5.
